# EUROPÄISCHE PATENTANMELDUNG

(11) **EP 2 026 230 A1**
(43) Veröffentlichungstag der Anmeldung: **18.02.2009**
(21) Anmeldenummer: 07015821.7
(22) Anmeldetag: 10.08.2007
(51) Int. Cl.: G06F 21/00

(54) **Technik zum Versenden und Empfangen von Daten im Rahmen eines kryptographischen Prozesses**

(71) Anmelder: UBS AG, 8001 Zürich (CH)
(72) Erfinder: Rhomberg, Alexander, Dr., 8953 Dietikon (CH); Villiger,Albert, 5333 Baldingen (CH)
(74) Vertreter: Röthinger, Rainer

(57) **Zusammenfassung**

Es wird eine Technik zum Versenden um Empfangen von Daten im Rahmen eines kryptographischen Prozesses beschrieben. Gemäß dieser Technik werden zu versendende Datenelemente mit kryptographischem Bezug in eine Audio-Datei und/oder in Tastatur-Codes umgesetzt. Dieser Ansatz ermöglicht es, zur Anbindung eines externen Hardware-Geräts mit kryptographischen Funktionen auf standardmäßige Audio- und Tastatur-Treiber zurückzugreifen.

## Beschreibung

### Technisches Gebiet

Die Erfindung betrifft allgemein das Gebiet der Kryptographie. Genauer gesagt wird eine Technik zum Einbinden eines Hardware-Geräts in einen kryptographischen Prozess beschrieben.

### Hintergrund

Elektronische Transaktionen über Rechnernetzwerke wie das Internet sind mittlerweile aus vielen Bereichen des alltäglichen Lebens nicht mehr wegzudenken. Zu diesen Bereichen zählen beispielsweise das Online-Banking, das Einkaufen über Online-Portale aber auch der Schriftverkehr mit Behörden wie Patent- und Finanzämtern.

In dem Maß, in dem elektronische Transaktionen an Bedeutung gewinnen, steigen auch die Anforderungen an eine zuverlässige Authentifizierung der an den Transaktionen beteiligten Parteien sowie an die allgemeine Sicherheit des Datentransfers. Zu Authentifizierungs- und Verschlüsselungszwecken werden heute allgemein kryptographische Prozesse eingesetzt. Die hierfür erforderlichen kryptographischen Einrichtungen werden oftmals bereits standardmäßig durch Betriebssysteme oder browserbasierte Anwendungsprogramme bereitgestellt. Um jedoch eine Manipulation der kryptographischen Prozesse durch Dritte soweit wie möglich zu erschweren, hat es sich als zweckmäßig erwiesen, auf Benutzerseite separate Hardware-Geräte in den kryptographischen Prozess einzubinden. Solche separaten Geräte lassen sich vor Manipulationen durch Dritte wesentlich besser schützen als der Rechner eines Benutzers (auf den Dritte häufig unmittelbar über eine bestehende Netzwerkverbindung zugreifen können).

Dedizierte Hardware-Geräte für kryptographische Prozesse sind beispielsweise aus den europäischen Patentanmeldungen EP 1 349 031 A und EP 1 349 032 A in Gestalt von Kartenlesegeräten für das Online-Banking bekannt. Kartenlesegeräte - aber auch andere Hardware-Geräte - lassen sich in der Regel nicht unmittelbar von einem Rechner aus ansprechen. Vielmehr ist es häufig erforderlich, zuerst eine Software (einen sogenannten Geräte-Treiber) auf dem Rechner zu installieren und zu starten. Einfach ausgedrückt sorgt der Geräte-Treiber dafür, dass das Hardware-Gerät und der Rechner die gleiche Sprache sprechen und miteinander kommunizieren können.

Es hat sich nun herausgestellt, dass das Installieren eines Geräte-Treibers für einen unerfahrenen Benutzer oftmals mühselig ist. In vielen Fällen scheitern aber auch erfahrene Benutzer an der Installation eines Geräte-Treibers, etwa wenn ein Benutzer nicht die für eine Software-Installation auf einem Rechner oder Rechnernetzwerk erforderlichen Administratorenrechte besitzt.

Einer weiteren Verbreitung sicherer kryptographischer Prozesse stehen folglich derzeit konträre Erfordernisse entgegen. Einerseits ist es aus Sicherheitsgründen wünschenswert, die kryptographische Einrichtungen in Gestalt separater Hardware-Geräte in die kryptographischen Prozesse einzubinden. Auf der anderen Seite scheitert eine solche Einbindung jedoch häufig an den Fähigkeiten oder Rechten der Benutzer.

Ausgehend von diesem Sachverhalt besteht das Erfordernis, die Einbindung eines separaten Hardware-Geräts mit einer kryptographischen Einrichtung in einen kryptographischen Prozess zu vereinfachen.

### Kurzer Abriss

Gemäß einem ersten Aspekt wird ein Verfahren zum Versenden von Daten im Rahmen eines kryptographischen Prozesses von einem Rechner und/oder Rechnernetzwerk mit einer kryptographischen Einrichtung bereitgestellt. Das Verfahren enthält die Schritte des Bestimmens, Erzeugens oder Bearbeitens von einem oder mehreren zu versendenden Datenelementen durch die kryptographische Einrichtung, des Umsetzens der zu versendenden Datenelemente in wenigstens eine Audio-Datei sowie des Versendens und/oder Abspielens der wenigstens einen Audiodatei.

Die einzelnen Schritte können ausschließlich auf dem Rechner, ausschließlich im Rechnernetzwerk oder teilweise auf dem Rechner und teilweise im Rechnernetzwerk ausgeführt werden. So wäre es denkbar, dass das Bestimmen, Erzeugen oder Bearbeiten des einen oder der mehreren Datenelemente sowie das Umsetzen der zu versendenden Datenelemente in die wenigstens eine Audio-Datei im Bereich des Rechnernetzwerks stattfindet und die wenigstens eine Audio-Datei anschließend an den Rechner gesendet wird. Der Rechner kann die Audio-Datei dann empfangen und abspielen. Zum Abspielen der Audio-Datei können solche Anwendungsprogramme eingesetzt werden, die im Rahmen einer Standard-Installation auf dem Rechner ohnehin vorhanden sind. Zu solchen Anwendungsprogrammen gehören beispielsweise Browser (bzw. Browser-Plug Ins) oder vom Betriebssystem oder anderweitig zur Verfügung gestellte Media-Player.

Im Rahmen des Abspielens der Audio-Datei werden in der Regel akustisch wiedergebbare Audio-Informationen erzeugt. Diese Audio-Informationen können vom Rechner an ein Hardware-Gerät mit einer kryptographischen Einrichtung zur weiteren Verarbeitung ausgegeben werden. An Stelle des Abspielens der Audio-Informationen seitens des Rechners wäre es jedoch auch möglich, dass der Rechner (z.B. eine vom Rechnernetzwerk erhaltene) Audio-Datei im Wesentlichen transparent (d.h. ohne Manipulation der in der Audio-Datei enthaltenen Datenelemente) an das Hardware-Gerät mit der kryptographischen Einrichtung ausgibt.

Gemäß einem weiteren Aspekt wird ein Verfahren zum Empfangen von Daten im Rahmen eines kryptographischen Prozesses durch ein Hardware-Gerät mit einer kryptographischen Einrichtung bereitgestellt. Dieses Verfahren enthält die Schritte des Empfangens wenigstens einer Audio-Datei und/oder von abgespielten Audio-Informationen, des Verarbeiten der wenigstens einen Audio-Datei und/oder der abgespielten Audio-Informationen, um ein oder mehrere darin enthaltene Datenelemente zu ermitteln, sowie des Verarbeitens der ermittelten Datenelemente durch die kryptographische Einrichtung.

Bei der kryptographischen Einrichtung kann es sich um eine Software-Komponente (beispielsweise um Programmcode), eine Hardware-Komponente (beispielsweise um einen Smart Card-Chip) oder um eine kombinierte Software/Hardware-Komponente handeln. Die kryptographische Einrichtung kann über die Datenelemente an dem kryptographischen Prozess beteiligt sein. Die Datenelemente haben in diesem Fall einen kryptographischen Bezug. Der Inhalt der Datenelemente kann auf den kryptographischen Prozess beschränkt sein. Insbesondere können die Datenelemente daher Inhalte (z.B. von einem Benutzer erfassbare lesbare Inhalte) aufweisen, welche keinerlei sinnvolle Audio-Wiedergabe oder Audio-Steuerung gestatten. Der kryptographische Prozess kann Teil einer der eingangs genannten elektronischen Transaktionen (z.B. Online-Banking, elektronisches Bezahlen, etc.) sein.

Das Hardware-Gerät kann sich zum Empfang der Audio-Datei bzw. der Audio-Informationen als Audio-Gerät bei einem Rechner und/oder Rechnernetzwerk anmelden. In diesem Fall kann dem Hardware-Gerät seitens des Rechners oder Rechnernetzwerks ein standardmäßig vorhandener Audio-Gerätetreiber zugeordnet werden. Es ist in einem solchen Fall folglich nicht erforderlich, einen separaten Gerätetreiber für das Hardware-Gerät auf dem Rechner oder Rechnernetzwerk zu installieren.

Das Verarbeiten der abgespielten Audio-Informationen kann eine Signalverarbeitung und/oder eine Dekodierung umfassen, um die darin enthaltenen Datenelemente zu ermitteln. Die Signalverarbeitung kann beispielsweise mittels einer Filterung oder mittels Spread Spectrum-Verarbeitungsschritten erfolgen.

Das Umsetzen der Datenelemente und Verarbeiten der umgesetzten Datenelemente kann auf unterschiedliche Art und Weise erfolgen. Gemäß einer Variante basiert das Umsetzen der Datenelemente und/oder das Verarbeiten der wenigstens einen Audio-Datei bzw. der Audio-Informationen auf einer vordefinierten Zuordnung zwischen Audio-Inhalten und den einzelnen Datenelementen. Eine solche Zuordnung lässt sich beispielsweise mittels einer Tabelle oder einer mathematischen Funktion erzeugen. Gemäß einer zweiten Variante, die mit der ersten Variante kombinierbar ist, werden mehrere verschiedene Audio-Dateien definiert, wobei jede einzelne Audio-Datei wenigstens einem vorbestimmten Datenelement entspricht. Das Senden einer bestimmten Folge derart vordefinierter Audio-Dateien ermöglicht es damit, eine Datenelementsequenz (z.B. eine Ziffernfolge) zu signalisieren.

Die Datenelemente können in unterschiedlichster Form in den Audio-Dateien bzw. den Audio-Informationen umgesetzt sein. So wäre es denkbar, die Datenelemente in Audio-Steuerdaten umzusetzen. Solche Audio-Steuerdaten bezeichnen beispielsweise die Auswahl bestimmter Instrumente oder eines bestimmten Lautstärke-Pegels. Alternativ oder zusätzlich hierzu können die Datenelemente in der Audio-Datei und/oder den Audio-Informationen in Form von Audio-Wiedergabedaten umgesetzt sein. Beispielsweise kann einem bestimmten Datenelement eine bestimmte Tonhöhe oder Tondauer entsprechen. Die Wiedergabedaten können in der Audio-Datei bzw. den abgespielten Audio-Informationen in analoger oder digitaler Form vorliegen.

Die Audio-Datei bzw. die Audio-Informationen können jegliches Audio-Format besitzen. Es hat sich als zweckmäßig herausgestellt, wenn die Audio-Datei bzw. die Audio-Informationen ein gängiges Audio-Format aufweist, für welches seitens eines Betriebssystems standardmäßig Unterstützung zur Verfügung gestellt wird. In diesem Zusammenhang können beispielsweise die Formate MIDI, WAV, MP3, AAC, WMA und PCM genannt werden.

Die Übertragung der Audio-Datei bzw. der abgespielten Audio-Informationen kann über eine standardisierte Schnittstelle erfolgen. So können die Audio-Datei bzw. die Audio-Informationen über eine Universal Seriell Bus (USB)-Schnittstelle oder über eine IEEE1394 (Firewire)-Schnittstelle versendet und/oder empfangen werden. Demgemäß können vom Betriebssystem standardmäßig bereit gestellte USB- oder Firewire-Treiber für Audio-Geräte zum Einsatz gelangen.

Gemäß einem weiteren Aspekt wird ein Verfahren zum Versenden von Daten im Rahmen eines kryptographischen Prozesses von einem Hardwaregerät mit einer kryptographischen Einrichtung bereitgestellt. Dieses Verfahren umfasst die Schritte des Bestimmens, Erzeugens oder Bearbeitens von einem oder mehreren zu versendenden Datenelementen durch die kryptographische Einrichtung, des Umsetzens der Datenelemente in wenigstens eine Tatstur-Code und des Versendens des wenigstens einen Tastaturcodes.

Gemäß einem zusätzlichen Verfahrensaspekt wird ein Verfahren zum Empfangen von Daten im Rahmen eines kryptographischen Prozesses durch einen Rechner und/oder ein Rechnernetzwerk mit einer kryptographischen Einrichtung zur Verfügung gestellt. Das Verfahren umfasst die Schritte des Empfangens wenigstens eines Tastatur-Codes, des Verarbeitens des wenigstens einen Tastatur-Codes, um in dem wenigstens einen Tastatur-Code enthaltene Datenelemente zu ermitteln, und des Verarbeitens der ermittelten Datenelemente durch die kryptographische Einrichtung.

Die einzelnen Verfahrensschritte können vollständig auf einem Rechner oder vollständig in einem Rechnernetzwerk ablaufen. Es ist jedoch auch denkbar, dass einzelne Verfahrensschritte auf dem Rechner und andere Verfahrensschritte auf dem Rechnernetzwerk ablaufen. So wäre es möglich, dass der wenigstens eine Tastatur-Code von dem Rechner empfangen und (im Wesentlichen transparent) an ein Rechnernetzwerk weitergeleitet wird. Das Verarbeiten des wenigstens einen Tastatur-Codes und der darin enthaltenen Datenelemente kann dann in dem Rechnernetzwerk stattfinden. Zum Weiterleiten des wenigstens einen Tastatur-Codes kann rechnerseitig ein Browser verwendet werden.

Die auf Tastatur-Codes basierenden Verfahren lassen sich mit den eingangs erläuterten, auf Audio-Dateien und/oder -Informationen basierenden Verfahren zur Implementierung einer bidirektionalen Datenverbindung kombinieren. Die Kommunikation in Richtung auf das Hardware-Gerät kann demgemäß mittels Audio-Dateien/Informationen und in Richtung von dem Hardware-Gerät mittels Tastatur-Codes erfolgen. Hierbei ist zu beachten, dass das Hardware-Gerät die Tastatur-Codes von sich aus erzeugen kann, also in der Regel keine Tastatur im herkömmlichen Sinn darstellt. Sowohl die Audio-Dateien/Informationen als auch die Tastatur-Codes können als kryptographische Nachrichten im Rahmen des kryptographischen Prozesses aufgefasst werden. Sie dienen daher der Übertragung Kryptographie-bezogener Informationen.

Zum Senden des wenigstens einen Tastatur-Codes kann sich das Hardware-Gerät als Tastatur bei einem Rechner und/oder Rechnernetzwerk anmelden. Die Anmeldung als Tastatur kann parallel zur Anmeldung als Audio-Gerät erfolgen. Zweckmäßigerweise wird dem Hardware-Gerät seitens des Rechners oder Rechnernetzwerks (ggf. zusätzlich zu einem Audio-Gerätetreiber) ein standardmäßig vorhandener Tastatur-Treiber zugeordnet. In diesem Fall kann also das Installieren eines separaten Treibers für das Hardware-Gerät entfallen.

Das Versenden und/oder Empfangen des wenigstens einen Tastatur-Codes kann wiederum über eine USB- oder Firewire-Schnittstelle erfolgen. Demgemäß können vom Betriebssystem standardmäßig bereit gestellte USB- oder Firewire-Treiber für Tastaturen zum Einsatz gelangen. Es können aber auch andere, standardmäßig vorhandene Schnittstellen angesprochen werden.

Die nachfolgenden Ausführungen gelten allgemein sowohl für das Hardware-Gerät (sowie dessen kryptographische Einrichtung) als auch für den Rechner und/oder das Rechnernetzwerk (und die jeweils zugeordnete kryptographische Einrichtung).

So kann das Hardware-Gerät oder der Rechner/das Rechnernetzwerk eine erste Benutzerschnittstelle aufweisen, um Datenelemente anzuzeigen. Bei der ersten Benutzerschnittstelle kann es sich um einen herkömmlichen Computer-Bildschirm oder eine in das Hardware-Gerät eingebaute Anzeigevorrichtung handeln. Ferner kann eine zweite Benutzerschnittstelle zum Steuern der jeweiligen kryptographischen Einrichtung vorhanden sein. Die zweite Benutzerschnittstelle kann beispielsweise als wenigstens ein Knopf oder wenigstens eine Taste ausgebildet sein. Eine Betätigung der zweite Benutzerschnittstelle kann bewirken, dass die kryptographische Einrichtung eines oder mehrere Datenelemente (die optional über die erste Benutzerschnittstelle angezeigt werden) signiert oder verschlüsselt. Die angezeigten Datenelemente können einen vom Benutzer erfassbaren (also lesbaren) Bedeutungsinhalt haben.

Die dem Hardware-Gerät oder dem Rechner/Rechnernetzwerk zugeordnete kryptographische Einrichtung kann für unterschiedlichste kryptographische Zwecke zum Einsatz gelangen. Wie bereits erwähnt, kann die kryptographische Einrichtung beispielsweise einen oder mehrere Schlüssel aufweisen, um die Datenelemente zu signieren oder zu verschlüsseln. Die hierzu verwendeten Schlüssel können zu einem symmetrischen oder asymmetrischen Schlüsselpaar gehören. Im Fall von asymmetrischen Schlüsseln kann dem Schlüsselpaar ein Zertifikat zugeordnet sein. Zusätzlich oder alternativ zum Signieren oder Verschlüsseln von Datenelemente kann jede kryptographische Einrichtung auch zur Authentifizierung oder Entschlüsselung signierter oder verschlüsselter Datenelemente ausgebildet sein. Ferner ist es denkbar, dass die kryptographische Einrichtung dazu ausgebildet ist, Datenelemente zu Signaturzwecken zu erzeugen. In diesem Fall ist es nicht unbedingt erforderlich, dass der kryptographischen Einrichtung auch ein Schlüssel zugeordnet ist.

Das Verarbeiten von Datenelementen durch die kryptographische Einrichtung kann ein Öffnen der kryptographischen Einrichtung mittels der Datenelemente beinhalten. Die Datenelemente können in diesem Fall den Bedeutungsinhalt einer persönlichen Identifikationsnummer (PIN) besitzen. Das Öffnen der kryptographischen Einrichtung kann den Zweck haben, die kryptographische Einrichtung für das nachfolgende Signieren oder Verschlüsseln von weiteren Datenelementen vorzubereiten.

Wie bereits oben erläutert, können die Datenelemente einzeln oder in ihrer Gesamtheit unterschiedlichste Bedeutungsinhalte im Rahmen des kryptographischen Prozesses besitzen. Insbesondere die folgenden Bedeutungsinhalte können dabei auftreten: ein allgemeiner numerischer Wert; eine sich auf eine bestimmte Transaktion beziehende Information (z.B. eine Kontonummer oder ein Teil hiervon); eine PIN; ein kryptograhpischer Challenge, an HASH-Wert (Prüfsumme); ein ASCII-String.

Auf der Seite des Rechners und/oder des Rechnernetzwerks kann eine Web-basierte Anwendung und/oder ein Browser laufen, welche(r) die Datenübertragung zu und/oder von dem Hardware-Gerät (sowie - optional - zu und/oder von einem Netzwerk-Server) steuert. So lassen sich beispielsweise die seitens des Rechners von dem Hardware-Gerät empfangenen Datenelemente (oder Tastatur-Codes) automatisch in ein Textfeld eines aktiven Browser-Fensters übernehmen. Von dort lassen sich die Datenelemente (oder Tastatur-Codes) dann in herkömmlicher Weise (z.B. über das Internet) an einen Netzwerk-Server senden. In diesem Zusammenhang kann ein Web-basiertes Anwendungsprogramm zum Einsatz gelangen, das teilweise auf dem Rechner und teilweise im Rechnernetzwerk läuft. Das Anwendungsprogramm kann vom Rechnernetzwerk auf den Rechner geladen werden.

Bei dem Hardeware-Gerät handelt es sich gemäß einer Variante um ein separates (z.B. externes) Zusatz-Gerät, welches an einen Rechner über eine vordefinierte Rechner-Schnittstelle angeschlossen werden kann. Das Hardware-Gerät kann demzufolge separat handhabbar sein. Zweckmäßigerweise weist das Hardware-Gerät eine deutlich geringere Baugröße als ein herkömmlicher Rechner auf. Das Hardware-Gerät kann beispielsweise als Kartenlesegerät oder als USB-Stick oder auch anderweitig ausgebildet sein. Wie bereits oben erwähnt, kann das Hardware-Gerät eine Anzeigeeinrichtung (etwa ein- oder mehrzeiliges Display) sowie wenigstens einen Knopf oder wenigstens eine Taste aufweisen.

Gemäß einem weiteren Aspekt wird ein Computerprogrammprodukt mit Programmcodemitteln zum Durchführen des hierin erläuterten Verfahrens, wenn das Computerprogrammprodukt auf einem Hardware-Gerät, einem Rechner oder einem Rechnernetzwerk läuft, vorgeschlagen. Das Computerprogrammprodukt kann auf einem computerlesbaren Medium (beispielsweise einer CD-Rom, einer Festplatte oder einem Speicherchip) gespeichert sein.

Gemäß einem zusätzlichen Aspekt wird ein Rechner und/oder Rechnernetzwerk zum Versenden von Daten im Rahmen eines kryptographischen Prozesses zur Verfügung gestellt. Der Rechner und/oder das Rechnernetzwerk umfassen/umfasst eine kryptographische Einrichtung zum Bestimmen, Erzeugen oder Bearbeiten von einem oder mehreren zu versendenden Datenelementen, einen Prozessor zum Umsetzen der zu versendenden Datenelemente in wenigstens eine Audiodatei sowie eine Schnittstelle zum Versenden der wenigstens einen Audiodatei und/oder von abgespielten, in der Audio-Datei enthaltenen Audio-Informationen. Der Rechner und/oder das Rechnernetzwerk können/kann optional eine Einrichtung zum Abspielen der Audio-Datei umfassen. Bei dieser Einrichtung kann es sich um einen herkömmlichen Browser (ggf. mit geeigneten Plug Ins) handeln.

Alternativ oder zusätzlich hierzu können/kann der Rechner und/oder das Rechnernetzwerk zum Empfangen von Daten im Rahmen eines kryptographischen Prozesses ausgebildet sein. In diesem Fall besitzen/besitzt der Rechner und/oder das Rechnernetzwerk eine Schnittstelle zum Empfangen wenigstens eines Tastatur-Codes, einen Prozessor zum Verarbeiten des wenigstens einen Tastatur-Codes, um ein oder mehrere in dem wenigstens einen Tastatur-Code enthaltene Datenelemente zu ermitteln, und eine kryptographische Einrichtung zum Verarbeiten der ermittelten Datenelemente.

Außerdem wird ein Hardware-Gerät zum Empfangen von Daten im Rahmen eines kryptographischen Prozesses bereitgestellt. Das Hardware-Gerät umfasst eine Schnittstelle zum Empfangen wenigstens einer Audio-Datei oder von abgespielten Audio-Informationen, einen Prozessor zum Verarbeiten der wenigstens einen Audio-Datei und/oder der abgespielten Audio-Informationen, um ein und/oder mehrere darin enthaltene Datenelemente zu ermitteln, und eine kryptographische Einrichtung zum Verarbeiten der ermittelten Datenelemente. Alternativ oder zusätzlich hierzu kann das Hardware-Gerät zum Versenden von Daten im Rahmen eines kryptographischen Prozesses ausgebildet sein. In diesem Fall besitzt das Hardware-Gerät eine kryptographische Einrichtung zum Bestimmen, Erzeugen oder Bearbeiten von einem oder mehreren zu versendenden Datenelementen, einen Prozessor zum Umsetzen der zu versendenden Datenelemente in wenigstens einen Tastatur-Code sowie eine Schnittstelle zum Versenden des wenigstens einen Tastatur-Codes.

### Kurze Beschreibung der Zeichnungen

Weitere Merkmale und Vorteile der hier vorgestellten technischen Lehren ergeben sich aus der nachfolgenden Beschreibung bevorzugter Ausführungsbeispiele sowie aus den Figuren. Es zeigt:
- Fig. 1: Ausführungsbeispiele eines Hardware-Geräts sowie eines Rechners zum Empfangen und Senden von Daten im Rahmen eines kryptographischen Prozesses;
- Fig. 2: eine schematische Darstellung einer Tabelle zum Kodieren und Dekodieren von Datenelementen im Rahmen eines kryptographischen Prozesses;
- Fig. 3: eine schematische Darstellung einer weiteren Tabelle zum Kodieren und Dekodieren von Datenelementen im Rahmen eines kryptographischen Prozesses; und
- Fig. 4: weitere Ausführungsbeispiele eines Hardware-Geräts, eines Rechners sowie eines Rechnernetzwerks zum Empfangen und Versenden von Daten im Rahmen eines kryptographischen Prozesses.

### Beschreibung bevorzugter Ausführungsbeispiele

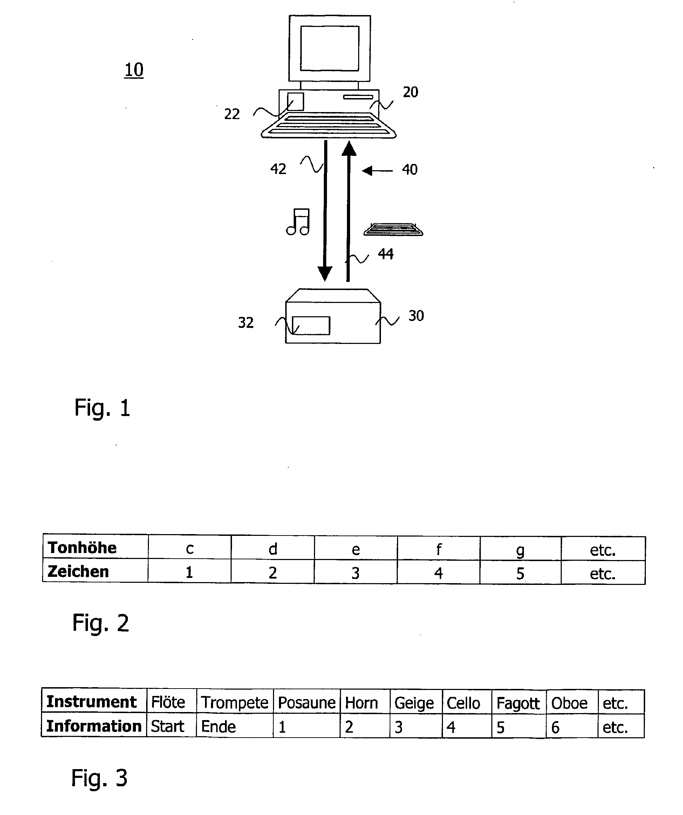

Fig. 1 zeigt schematisch ein System 10 zum Durchführen eines kryptographischen Prozesses. Das System 10 umfasst einen Rechner 20 mit einer zugeordneten kryptographischen Einrichtung 22 sowie ein separates Hardware-Gerät 30 mit einer zugeordneten kryptographischen Einrichtung 32. Der Rechner 20 ist mit dem Hardeware-Gerät 30 über eine bidirektionale USB-Schnittstelle 40 gekoppelt, die in Fig. 1 durch zwei Pfeile 42, 44 veranschaulicht ist.

Im Folgenden wird der Betrieb des Systems 10 im Zusammenhang mit der Erzeugung einer signierten Datei erläutert. Es ist darauf hinzuweisen, dass das System 10 auch für beliebige andere kryptographische Zwecke wie die Verschlüsselung einer Datei eingesetzt werden könnte.

Wie allgemein bekannt, wird im Rahmen einer elektronischen Signatur in einem ersten Schritt ein HASH-Wert (also eine Prüfsumme) der zu signierenden Datei berechnet. Der berechnete HASH-Wert wird mit Hilfe eines geheimen Signaturschlüssels (der in der kryptographischen Einrichtung 32 des Hardware-Geräts 30 gespeichert ist) signiert. Der signierte HASH-Wert bildet eine Signaturdatei. Diese Signatur-Datei wird zusammen mit der Datei, für welche der HASH-Wert berechnet wurde, an einen Empfänger übertragen. Der Empfänger kann dann in bekannter Weise mit Hilfe eines dem geheimen Signaturschlüssel zugeordneten öffentlichen Prüfschlüssels die Authentizität der Signatur sowie die Integrität der signierten Datei ermitteln.

Zur Vorbereitung der elektronischen Signatur wird das Hardware-Gerät 30 über ein USB-Kabel an einen USB-Anschluss des Rechners 20 angesteckt. Das Hardware-Gerät 30 wird daraufhin vom Rechner 20 als USB-kompatibles Gerät erkannt, und es wird eine herkömmliche Anmeldeprozedur durchgeführt. Im Rahmen dieser Anmeldeprozedur meldet sich das Hardware-Gerät 30 für den Datenempfang als USB-Audio-Gerät sowie für das Senden von Daten als USB-Tastatur beim Rechner 20 an. Der Rechner 20 ordnet darauf hin dem Hardware-Gerät 30 die vom Betriebssystem des Rechners 20 standardmäßig zur Verfügung gestellten USB-Audio- und Tastatur-Treiber zu. Das Hardware-Gerät 30 kann anschließend ohne das Installieren spezieller Hardware-Treiber auf dem Rechner 20 bidirektional mit dem Rechner 20 kommunizieren.

Genauer gesagt kommuniziert das Hardware-Gerät 30 mit einem Signatur-Anwendungsprogramm ("Signaturprogramm") auf dem Rechner 20. Dieses Programm kann standardmäßig auf dem Rechner 20 vorhanden sein oder aber (geeignete Administratorenrechte vorausgesetzt) vom Benutzer auf dem Rechner 20 installiert worden sein. Fehlen dem Benutzer derartige Administratorenrechte (oder fehlt dem Benutzer das technische Know-How), kann das Signaturprogramm auch als Web-basiertes Anwendungsprogramm von einem in Fig. 1 nicht dargestellten Netzwerk-Server bereitgestellt und von einem Browser des Rechners 20 angesprochen werden.

In dem im Zusammenhang mit Fig. 1 erläuterten Ausführungsbeispiel ist der in der kryptographischen Einrichtung 32 des Hardware-Geräts 30 enthaltene geheime Signaturschlüssel mittels eines PIN-Codes geschützt. Dies bedeutet, dass der Signaturschlüssel erst dann zu Signaturzwecken bereit steht, wenn die kryptographische Einrichtung 32 mittels des korrekten PIN-Codes "geöffnet" wurde. In einem ersten Schritt wird der Benutzer daher von dem auf dem Rechner 20 laufenden Signaturprogramm aufgefordert, einen PIN-Code zum Öffnen der kryptographischen Einrichtung 32 einzugeben. Der vom Benutzer eingegebene PIN-Code wird dann an die kryptographische Einrichtung 22 des Rechners 20 weitergeleitet. Im Ausführungsbeispiel ist die kryptographische Einrichtung 22 Teil des Programmcodes des Signaturprogramms.

Nach Empfang des PIN-Codes durch die kryptographische Einrichtung 22 setzt diese die einzelnen Datenelemente (Ziffern) des PIN-Codes in eine einzige Audio-Datei oder in eine Mehrzahl sequentieller Audio-Dateien (z.B. in eine Audio-Datei pro Datenelement/Ziffer) um. Dieses Umsetzen erfolgt anhand einer vordefinierten Zuordnung zwischen Audio-Inhalten einerseits und den einzelnen Datenelementen andererseits. Zu diesem Zweck können die in den Fign. 2 und 3 veranschaulichten Kodierungstabellen zum Einsatz gelangen (selbstverständlich könnten die in den Fign. 2 und 3 veranschaulichten Tabellen zum Beispiel für den gesamten ASCII-Zeichensatz erweitert werden).

Die in Fig. 2 veranschaulichte Tabelle ermöglicht das Umsetzen der Ziffern des PIN-Codes in Audio-Wiedergabedaten. So wird beispielsweise ein beispielhafter PIN-Code mit der Ziffernfolge "12345" in die Ton-Sequenz "cdefg" umgesetzt. Die für den PIN-Code "12345" ermittelte Ton-Sequenz "cdefg" wird anschließend auf eine dem Fachmann bekannte Weise bearbeitet, um eine analoge oder digitale Audio-Datei in einem geläufigen Audio-Format wie WAV oder PCM zu erzeugen.

Fig. 3 veranschaulicht eine alternative Tabelle zum Umsetzen des PIN-Codes in eine Audio-Datei. Mittels der in Fig. 3 veranschaulichten Tabelle lassen sich Datenelemente wie die PIN-Ziffernfolge "12345" in Audio-Steuerdaten (zum Beispiel gemäß dem MIDI-Format) umwandeln. So entspricht der PIN-Code "12345" einer Audio-Datei mit den aufeinanderfolgenden Aufrufen der Instrumente "Posaune", "Horn", "Geige", "Cello" und "Fagott" oder einer Sequenz entsprechender einzelner Audio-Dateien. Ferner ermöglicht die Tabelle gemäß Fig. 3 auch noch das Übermitteln von z.B. Start- und Ende-Steuerbefehlen. Mit solchen (und ggf. weiteren) Steuerbefehlen können das Hardware-Gerät 30 und dessen kryptographische Einrichtung 32 gesteuert werden.

Nach dem Erstellen wenigstens einer Audio-Datei für den vom Benutzer eingegebenen PIN-Code wird diese Audio-Datei unter Steuerung des Signaturprogramms vom Rechner 20 an das Hardware-Gerät 30 übertragen. Die Übertragung der Audio-Datei erfolgt über die USB-Schnittstelle 40 mittels des auf dem Rechner 20 installierten USB-Audio-Treibers. Dies ist in Fig. 1 durch den Pfeil 42 veranschaulicht.

Als Alternative zum Übertragen der Audio-Datei als solches an das Hardware-Gerät 30 wäre es auch denkbar, die Audio-Datei mittels eines geeigneten Anwendungsprogramms (z.B. des Windows Media Player) auf dem Rechner 20 abzuspielen. Die abgespielten Audio-Informationen werden dann automatisch über die USB-Schnittstelle an das Hardware-Gerät 30 ausgegeben, das sich ja als USB-Audio-Gerät beim Rechner 20 angemeldet hat.

Die kryptographische Einrichtung 32 des Hardware-Geräts 30 empfängt die Audio-Datei bzw. die Audio-Informationen und verarbeitet die empfangene Audio-Datei bzw. Audio-Informationen, um die darin enthaltenen Datenelemente (also den PIN-Code) zu ermitteln. Im Rahmen der Verarbeitung der Audio-Datei benutzt die kryptographische Einrichtung 32 die entsprechende Kodierungstabelle (vgl. Fign. 2 und 3), mittels derer die Datenelemente kodiert wurden. Handelt es sich bei der empfangenen Audio-Datei beispielsweise um eine MIDI-Datei mit aufeinanderfolgenden Bezugnahmen auf die Instrumente "Posaune", "Horn", "Geige", "Cello" und "Fagott", so kann die kryptographische Einrichtung 32 anhand der in Fig. 3 veranschaulichten Tabelle den PIN-Code "12345" aus der empfangenen Audio-Datei ermitteln.

Zum Verarbeiten von abgespielten Audio-Informationen (also z.B. Tönen) seitens der kryptographischen Einrichtung 32 sind Signalverarbeitungsschritte erforderlich. Diese Signalverarbeitungsschritte können Filterschritte enthalten, um die hier interessierenden Audio-Informationen von anderen Audio-Informationen (wie von einem Internet-Radio erzeugten Audio-Informationen) zu trennen, welche unter Umständen ebenfalls vom Rechner 20 abgespielt werden. Nach der Filterung können Spread Spectrum-Verarbeitungsschritte zum Einsatz gelangen, um die in den gefilterten Audio-Informationen enthaltenen Audio-Inhalte zu ermitteln. Aus den Audio-Inhalten lassen sich dann wieder durch Dekodierungsschritte (vgl. Fign. 2 und 3) die Datenelemente ermitteln.

Stellt die kryptographische Einrichtung 32 fest, dass der derart ermittelte PIN-Code korrekt ist, stellt sie den von ihr verwalteten geheimen Signaturschlüssel für eine ein- oder mehrmalige Signatur zur Verfügung. Die kryptographische Einrichtung 32 ist damit "geöffnet". Dies signalisiert die kryptographische Einrichtung 32 durch eine Bestätigungsnachricht dem Rechner 20. Die Bestätigungsnachricht besteht im vorliegenden Ausführungsbeispiel aus der Zeichenfolge "OK". Diese Zeichenfolge wird von der kryptographischen Einrichtung 32 in einem ersten Schritt in die entsprechenden Tastatur-Codes für "O" und "K" umgesetzt und anschließend, wie durch den Pfeil 44 in Fig. 1 angedeutet, an den Rechner 20 geschickt. Da das Hardware-Gerät 30 sich beim Rechner 20 als USB-Tastatur angemeldet hat, kann der Rechner 20 die vom Hardware-Gerät 30 erhaltenen Tastatur-Codes interpretieren und dem Signaturprogramm (z.B. in Form eines ASCII-Strings) zur Verfügung stellen. Alternativ oder zusätzlich hierzu kann der Rechner 20 die Tastatur-Codes an ein Rechnernetzwerk zur Interpretation der Tastatur-Codes seitens des Rechnernetzwerks übersenden.

Durch Empfang der Zeichenfolge "OK" ist das Signaturprogramm des Rechners 20 jetzt darüber informiert, dass die kryptographische Einrichtung 32 des Hardware-Geräts 30 nunmehr geöffnet ist und zu Signaturzwecken bereit steht. Das Signaturprogramm (genauer gesagt dessen kryptographische Einrichtung 22) berechnet daher in einem nächsten Schritt einen HASH-Wert für die vom Benutzer zur Signatur ausgewählte Datei. Dieser HASH-Wert (typischerweise ein ASCII-String) wird dann in einem weiteren Schritt von der kryptographischen Einrichtung 22 mittels einer der Kodierungstabellen der Fign. 2 und 3 kodiert. Die sich hieraus ergebende Ton-Sequenz oder die sich hieraus ergebenden Audio-Steuerdaten werden dann in ein vordefiniertes Audio-Format umgesetzt. Die daraus resultierende Audio-Datei wird anschließend auf die gleiche Weise wie der PIN-Code an die geöffnete kryptographische Einrichtung 32 des Hardware-Geräts 30 gesendet (d.h. entweder als Datei oder in Form abgespielter Audio-Informationen)

Die kryptographische Einrichtung 32 setzt die empfangene Audio-Datei wiederum mittels der geeigneten Tabelle (vgl. Fign. 2 und 3) in den HASH-Wert (ASCII-String) um und wendet den geheimen Signaturschlüssel darauf an. Das Anwenden des geheimen Signaturschlüssels auf den HASH-Wert ergibt wiederum einen ASCII-String (einen signierten HASH-Wert). Dieser ASCII-String wird dann von der kryptographischen Einrichtung 32 wie bereits oben erläutert in eine Folge von Tastatur-Codes umgesetzt.

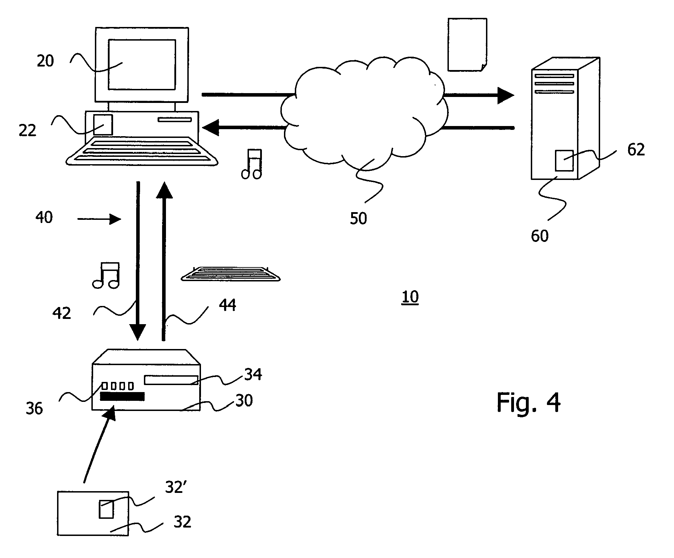

Die derart erzeugten Tastatur-Codes werden über die USB-Schnittstelle 40 an den Rechner 20 versendet und dort wieder in einen ASCII-String (den signierten HASH-Wert) gewandelt. Der ASCII-String wird von der kryptographischen Einrichtung 22 des Signaturprogramms in eine Signaturdatei umgesetzt und der zu signierenden Datei zugeordnet. Im Anschluss daran kann die zu signierende Datei zusammen mit der Signaturdatei auf einem Datenträger (z.B. einer Diskette oder einer CD-Rom) gespeichert werden oder aber über eine Netzwerkverbindung (in Fig. 1 nicht dargestellt) an einen Netzwerk-Server übermittelt werden. Zusätzlich oder alternativ hierzu können die empfangenen Tastatur-Codes auch unmittelbar (transparent) an einen Netzwerk-Server, wie in Fig. 4 gezeigt, gesendet werden.

Fig. 4 veranschaulicht ein weiteres System 10 mit mehreren Ausführungsbeispielen von in einem kryptographischen Prozess zum Einsatz gelangenden Vorrichtungen. Das in Fig. 4 veranschaulichte System basiert auf dem System gemäß Fig. 1, und aus diesem Grund wurden übereinstimmende Komponenten mit den gleichen Bezugszeichen versehen.

Wie Fig. 4 entnommen werden kann, ist das Hardware-Gerät 30 nunmehr explizit als Kartenlesegerät mit einem ein- oder mehrzeiligen Display 34 sowie Tasten 36 ausgebildet. Das Display 34 bildet eine erste Benutzerschnittstelle und ermöglicht beispielsweise das Anzeigen von Aufforderungen an den Benutzer, bestimmte Schritte wie das Durchführen einer elektronischen Signatur zu bestätigen. Diese Bestätigung kann durch Betätigen einer der Tasten 36, welche als weitere Benutzerschnittstelle fungieren, erfolgen. Die Anzeigeeinrichtung 34 ermöglicht außerdem eine Darstellung der zu signierenden Datenelemente oder eines Teils sowie von Aufforderungsnachrichten hiervon.

Das Kartenlesegerät 30 ist zur Aufnahme einer Smart Card 32 ausgebildet. Die Smart Card 32 beinhaltet ihrerseits einen Smart Card-Chip 32', der Funktionalitäten einer kryptographischen Einrichtung zur Verfügung stellt. Weitere Funktionen einer kryptographischen Einrichtung werden von dem Kartenlesegerät 30 selbst bereit gestellt.

Der Rechner 20 ist als herkömmlicher PC ausgebildet und kann über eine Netzwerkverbindung 50 mit einem Netzwerk-Server 60 kommunizieren. Der Netzwerk-Server 60 besitzt seinerseits eine kryptographische Einrichtung 62.

Gemäß einer Implementierung eines Signatur-Verfahrens erfolgt zunächst ein "Öffnen" des Smart Card-Chips 32' durch eine bidirektionale Kommunikation zwischen dem Rechner 20 und dem Kartenlesegerät 30 unter Zuhilfenahme eines PIN-Codes wie oben unter Bezugnahme auf Fig. 1 beschrieben. Im Anschluss an das Öffnen des Smart Card-Chips 32' steht der von diesem Chip 32' zur Verfügung gestellte elektronische Schlüssel zu Signaturzwecken zur Verfügung. Die zu signierenden Datenelemente können beispielsweise unmittelbar vom Netzwerk-Server 60 bereitgestellt werden. Zu diesem Zweck kann die kryptographische Einrichtung 62 des Netzwerk-Servers 60 in einem ersten Schritt (wie oben unter Bezugnahme auf die Fign. 1 bis 3 beschrieben) eine Audio-Datei mit den zu signierenden Datenelementen (z.B. einem Challenge, einem HASH-Wert oder einem transaktionsbezogenen Wert wie einer Kontonummer) erstellen.

Die derart erstellte Audio-Datei wird anschließend vom Netzwerk-Server 60 über die Netzwerkverbindung 50 an den Rechner 20 übermittelt. Diese Übermittlung sowie die sich daran anschließenden Verarbeitungsschritte können von einem Web-basierten Anwendungsprogramm gesteuert werden. Dieses Web-basierte Anwendungsprogramm läuft typischerweise teilweise auf dem Netzwerk-Server 60 und teilweise auf dem Rechner 20 und kann ausgebildet sein, um mit einem auf dem Rechner 20 installierten Browser zu kommunizieren.

Nach Empfang der Audio-Datei seitens des Rechners 20 wird die Audio-Datei unter Steuerung des Web-basierten Anwendungsprogramms mittels eines Browser-Plug Ins oder einem anderweitigen, vorzugsweise standardmäßig vorhandenen Wiedergabeprogramm abgespielt. Die durch Abspielen der Audio-Datei erzeugten Audio-Informationen werden anschließend über die USB-Schnittstelle 40 an das Kartenlesegerät 30 weitergeleitet und dort mittels Signalverarbeitung und sich daran anschließender Dekodierung (vgl. Fign. 2 und 3) wieder in die zu signierenden Datenelemente umgesetzt.

Nach dieser Umsetzung erfolgt eine Signierung der Datenelemente mittels eines (optionalen) Schlüssels des Kartenlesegeräts 30 und mittels eines Schlüssels des Smartcard-Chips 32'. Die signierten Daten werden anschließend wie im Zusammenhang mit Fig. 1 beschrieben in Tastatur-Codes umgesetzt und über die USB-Schnittstelle 40 an den Rechner 20 versendet. Die Tastatur-Codes werden vom Rechner 20 transparent oder in Form eines ASCII-Strings über die Netzwerkverbindung 50 an den Netzwerk-Server 60 weitergeleitet. Der Netzwerk-Server wertet die Signatur (beispielsweise zu Authentifizierungszwecken) aus und leitet in Abhängigkeit von dem Auswertungsergebnis weitere Verarbeitungsschritte ein.

Die in Fig. 4 veranschaulichten Komponenten können gemäß einer Weiterbildung des Ausführungsbeispiels hinsichtlich ihrer Konfiguration und ihrer Funktionsweise den aus den europäischen Patentanmeldungen EP 1 349 031 A und 1 349 032 A bekannten Komponenten entsprechen. Der Inhalt dieser beiden Patentanmeldungen wird daher hinsichtlich der Konfiguration und der Funktionsweise dieser Komponenten ausdrücklich durch Bezugnahme in den Offenbarungsgehalt der vorliegenden Unterlagen mit aufgenommen. Dies gilt insbesondere auch die einzelnen Schritte hinsichtlich der Authentifizierung des Benutzers und der Daten sowie der Zuordnung separater Schlüssel zum Kartenlesegerät 30 einerseits und der Smart Card 32 andererseits.

Die in den europäischen Patentanmeldungen EP 1 349 031 A und 1 349 032 A offenbarten Verfahren werden gemäß Fig. 4 unter der Maßgabe durchgeführt, dass die jeweils zu sendenden und zu empfangenen Dateien in Gestalt von Audio-Dateien und Tastatur-Codes (wie durch die Pfeile 42 und 44 gekennzeichnet) übertragen werden. Ferner ist es denkbar, dass die Audio-Dateien (z.B. bezüglich der Challenges) bereits von der kryptographischen Einrichtung 62 des Netzwerk-Servers 60 erzeugt und vom Rechner 20 transparent in Richtung auf das Kartenlesegerät 30 weitergeleitet werden.

## Patentansprüche

1. Verfahren zum Versenden von Daten im Rahmen eines kryptographischen Prozesses von einem Rechner (20) und/oder Rechnernetzwerk (50, 60) mit einer kryptographischen Einrichtung (22; 62), enthaltend die Schritte:
- Bestimmen, Erzeugen oder Bearbeiten von einem oder mehreren zu versendenden Datenelementen durch die kryptographische Einrichtung (22; 62);
- Umsetzen der zu versendenden Datenelemente in wenigstens eine Audio-Datei; und
- Versenden der wenigstens einen Audio-Datei und/oder Abspielen der Audio-Datei.

2. Verfahren nach dem vorhergehenden Anspruch, **dadurch gekennzeichnet, dass** das Bestimmen, Erzeugen oder Bearbeiten des einen oder der mehreren Datenelemente sowie das Umsetzen der zu versendenden Datenelemente in die wenigstens eine Audio-Datei im Bereich des Rechnernetzwerkes (50, 60) stattfindet und die wenigstens eine Audio-Datei an den Rechner (20) gesendet wird.

3. Verfahren nach dem vorhergehenden Anspruch, **dadurch gekennzeichnet, dass** der Rechner (20) die Audio-Datei empfängt und abspielt.

4. Verfahren nach dem vorhergehenden Anspruch, **dadurch gekennzeichnet, dass** das Abspielen der Audio-Datei mittels eines im Rahmen einer Standard-Installation auf dem Rechner (20) vorhandenen Anwendungsprogramms erfolgt.

5. Verfahren nach einem der beiden vorhergehenden Ansprüche, **dadurch gekennzeichnet,**
**dass** die abgespielten Audio-Informationen vom Rechner (20) an ein Hardware-Gerät (30) mit einer kryptographischen Einrichtung (32) ausgegeben werden.

6. Verfahren nach Anspruch 2, **dadurch gekennzeichnet,**
**dass** der Rechner (20) die Audio-Datei im Wesentlichen transparent an ein Hardware-Gerät (30) mit einer kryptographischen Einrichtung (32) ausgibt.

7. Verfahren zum Empfangen von Daten im Rahmen eines kryptographischen Prozesses durch ein Hardware-Gerät (30) mit einer kryptographischen Einrichtung (32), enthaltend die Schritte:
- Empfangen wenigstens einer Audio-Datei und/oder von abgespielten Audio-Informationen;
- Verarbeiten der wenigstens einen Audio-Datei und/oder der abgespielten Audio-Informationen, um ein oder mehrere darin enthaltene Datenelemente zu ermitteln; und
- Verarbeiten der ermittelten Datenelemente durch die kryptographische Einrichtung (32).

8. Verfahren nach dem vorhergehenden Anspruch, **dadurch gekennzeichnet, dass** das Hardware-Gerät (30) sich zum Empfang der Audio-Datei und/oder der abgespielten Audio-Informationen als ein Audio-Gerät bei einem Rechner (20) und/oder Rechnernetzwerk (50, 60) anmeldet.

9. Verfahren nach dem vorhergehenden Anspruch, **dadurch gekennzeichnet, dass** dem Hardware-Gerät (30) seitens des Rechners (20) und/oder Rechnernetzwerks (50; 60) ein standardmäßig vorhandener Treiber für ein Audio-Gerät zugeordnet wird.

10. Verfahren nach einem der drei vorhergehenden Ansprüche, **dadurch gekennzeichnet,**
**dass** das Verarbeiten der abgespielten Audio-Informationen eine Signalverarbeitung und/oder eine Dekodierung umfasst, um die Datenelemente zu ermitteln.

11. Verfahren nach einem der vorhergehenden Ansprüche, **dadurch gekennzeichnet,**
**dass** das Umsetzen und/oder Verarbeiten der wenigstens einen Audio-Datei und/oder der abgespielten Audio-Informationen auf einer vordefinierten Zuordnung zwischen Audio-Inhalten und den einzelnen Datenelementen basiert.

12. Verfahren nach einem der vorhergehenden Ansprüche, **dadurch gekennzeichnet,**
**dass** eine Mehrzahl verschiedener Audio-Dateien definiert wird und jede einzelne Audio-Datei einem oder mehreren vorbestimmten Datenelementen entspricht.

13. Verfahren nach einem der vorhergehenden Ansprüche, **dadurch gekennzeichnet,**
**dass** die Datenelemente in der Audio-Datei in Audio-Steuerdaten umgesetzt sind.

14. Verfahren nach einem der vorhergehenden Ansprüche, **dadurch gekennzeichnet,**
**dass** die Datenelemente in der Audio-Datei und/oder in den abgespielten Audio-Informationen in Audio-Wiedergabedaten umgesetzt sind.

15. Verfahren nach einem der vorhergehenden Ansprüche, **dadurch gekennzeichnet,**
**dass** die wenigstens eine Audio-Datei und/oder die abgespielten Audio-Informationen eines der folgenden Audio-Formate besitzen/besitzt: MIDI, WAV, MP3, AAC, WMA, PCM

16. Verfahren nach einem der vorhergehenden Ansprüche, **dadurch gekennzeichnet,**
**dass** die wenigstens eine Audio-Datei und/oder die abgespielten Audio-Informationen über eine Universal Serial Bus (USB)- oder eine IEEE1394 (Firewire)-Schnittstelle (40) versendet und/oder empfangen werden/wird.

17. Verfahren zum Versenden von Daten im Rahmen eines kryptographischen Prozesses von einem Hardware-Gerät (30) mit einer kryptographischen Einrichtung (32), enthaltend die Schritte:
- Bestimmen, Erzeugen oder Bearbeiten von einem oder mehreren zu versendenden Datenelementen durch die kryptographische Einrichtung (32);
- Umsetzen der Datenelemente in wenigstens einen Tastatur-Code;
- Versenden des wenigstens einen Tastatur-Codes.

18. Verfahren nach dem vorhergehenden Anspruch, **dadurch gekennzeichnet, dass** das Hardware-Gerät (30) sich zum Senden des wenigstens einen Tastatur-Codes als Tastatur bei einem Rechner (20) oder Rechnernetzwerk (50, 60) anmeldet.

19. Verfahren nach dem vorhergehenden Anspruch, **dadurch gekennzeichnet, dass** dem Hardware-Gerät (30) seitens des Rechners (20) oder Rechnernetzwerks (50, 60) ein standardmäßig vorhandener Tastatur-Treiber zugeordnet wird.

20. Verfahren zum Empfangen von Daten im Rahmen eines kryptographischen Prozesses durch einen Rechner (20) und/oder ein Rechnernetzwerk (50, 60) mit einer kryptographischen Einrichtung (22; 62), enthaltend die Schritte:
- Empfangen wenigstens eines Tastatur-Codes;
- Verarbeiten des wenigstens einen Tastatur-Codes, um ein oder mehrere in dem wenigstens einen Tastatur-Code enthaltene Datenelemente zu ermitteln; und
- Verarbeiten der ermittelten Datenelemente durch die kryptographische Einrichtung (22; 62).

21. Verfahren nach dem vorhergehenden Anspruch, **dadurch gekennzeichnet, dass** der wenigstens eine Tastatur-Code von dem Rechner (20) empfangen und an ein Rechnernetzwerk (50, 60) weitergeleitet wird, wobei das Verarbeiten des wenigstens einen Tastatur-Codes und der darin enthaltenen Datenelemente in dem Rechnernetzwerk (50, 60) stattfindet.

22. Verfahren nach dem vorhergehenden Anspruch, **dadurch gekennzeichnet, dass** das Weiterleiten des wenigstens einen Tastatur-Codes mittels eines auf dem Rechner (20) installierten Browsers erfolgt.

23. Verfahren nach einem der sechs vorhergehenden Ansprüche, **dadurch gekennzeichnet,**
**dass** der wenigstens eine Tastatur-Code über eine Universal Serial Bus (USB)- oder eine IEEE1394 (Firewire)-Schnittstelle (40) versendet und/oder empfangen wird.

24. Verfahren nach einem der vorhergehenden Ansprüche, **dadurch gekennzeichnet,**
**dass** Datenelemente mittels einer ersten Benutzerschnittstelle (34) angezeigt werden.

25. Verfahren nach einem der vorhergehenden Ansprüche, **dadurch gekennzeichnet,**
**dass** das die kryptographische Einrichtung (22; 32; 62) mittels einer zweiten Benutzerschnittstelle (36) gesteuert wird.

26. Verfahren nach einem der vorhergehenden Ansprüche, **dadurch gekennzeichnet,**
**dass** die Datenelemente von der kryptographische Einrichtung (22; 32; 62) signiert oder verschlüsselt werden.

27. Verfahren nach einem der vorhergehenden Ansprüche, **dadurch gekennzeichnet,**
**dass** die kryptographische Einrichtung (22; 32; 62) signierte oder verschlüsselte Datenelemente zur Authentifizierung oder Entschlüsselung verarbeitet.

28. Verfahren nach einem der vorhergehenden Ansprüche, **dadurch gekennzeichnet,**
**dass** die Datenelemente von der kryptographische Einrichtung (22; 32; 62) zu Signaturzwecken erzeugt werden.

29. Verfahren nach einem der vorhergehenden Ansprüche, **dadurch gekennzeichnet,**
**dass** die kryptographische Einrichtung (22; 32; 62) mittels der Datenelemente geöffnet wird.

30. Verfahren nach einem der vorhergehenden Ansprüche, **dadurch gekennzeichnet,**
**dass** die Datenelemente einzeln oder in ihrer Gesamtheit wenigstens einen der folgenden Bedeutungsinhalte haben: ein allgemeiner numerischer Wert; eine sich auf eine bestimmte elektronische Transaktion beziehende Information; eine persönliche Identifikationsnummer (PIN); ein kryptographischer Challenge; ein Hash-Wert; ein ASCII-String.

31. Verfahren nach einem der vorhergehenden Ansprüche, **dadurch gekennzeichnet,**
**dass** auf dem Rechner (20) und/oder Rechnernetzwerk (50, 60) eine Web-basiertes Anwendungsprogramm und/oder ein Browser läuft, welche/welcher die Datenübertragung steuern/steuert.

32. Verfahren nach dem vorhergehenden Anspruch, **dadurch gekennzeichnet, dass** der Browser auf dem Rechner (20) läuft.

33. Verfahren nach einem der beiden vorhergehenden Ansprüche, **dadurch gekennzeichnet,**
**dass** das Web-basierte Anwendungsprogramm teilweise auf dem Rechner (20) und teilweise im Rechnernetzwerk (50, 60) läuft.

34. Verfahren nach einem der vorhergehenden Ansprüche, **dadurch gekennzeichnet,**
**dass** das Hardware-Gerät (30) ein Kartenlesegerät ist.

35. Verfahren nach einem der vorhergehenden Ansprüche, **dadurch gekennzeichnet,**
**dass** das Hardware-Gerät (30) ein USB-Stick ist.

36. Verfahren nach einem der vorhergehenden Ansprüche, **dadurch gekennzeichnet,**
**dass** die kryptographische Einrichtung (22; 32; 62) einen Smart Card-Chip (32') und/oder Programmcode umfasst.

37. Computerprogrammprodukt mit Programmeodemitteln zum Durchführen des Verfahrens nach einem der obigen Ansprüche, wenn das Computerprogrammprodukt auf einem Hardware-Gerät, Rechner oder Rechnernetzwerk läuft.

38. Computerprogrammprodukt nach Anspruch 37, gespeichert auf einem computerlesbaren Medium.

39. Rechner (20) und/oder Rechnernetzwerk (50, 60) zum Versenden von Daten im Rahmen eines kryptographischen Prozesses, umfassend:
- eine kryptographische Einrichtung (22; 62) zum Bestimmen, Erzeugen oder Bearbeiten von einem oder mehreren zu versendenden Datenelementen;
- einen Prozessor (20; 60) zum Umsetzen der zu versendenden Datenelemente in wenigstens eine Audio-Datei; und
- eine Schnittstelle (40) zum Versenden der wenigstens einen Audio-Datei und/oder von abgespielten, in der Audio-Datei enthaltenen Audio-Informationen.

40. Rechner (20) oder Rechnernetzwerk (50, 60) zum Empfangen von Daten im Rahmen eines kryptographischen Prozesses, umfassend:
- eine Schnittstelle (40) zum Empfangen wenigstens eines Tastatur-Codes;
- einen Prozessor (20; 60) zum Verarbeiten des wenigstens einen Tastatur-Codes, um ein oder mehrere in dem wenigstens einen Tastatur-Code enthaltene Datenelemente zu ermitteln; und
- eine kryptographischen Einrichtung (22; 62) zum Verarbeiten der ermittelten Datenelemente.

41. Hardware-Gerät (30) zum Empfangen von Daten im Rahmen eines kryptographischen Prozesses, umfassend:
- eine Schnittstelle (40) zum Empfangen wenigstens einer Audio-Datei und/oder von abgespielten Audio-Informationen;
- einen Prozessor (30) zum Verarbeiten der wenigstens einen Audio-Datei und/oder der abgespielten Audio-Informationen, um ein oder mehrere darin enthaltene Datenelemente zu ermitteln; und
- eine kryptographische Einrichtung (32) zum Verarbeiten der ermittelten Datenelemente.

42. Hardware-Gerät (30) zum Versenden von Daten im Rahmen eines kryptographischen Prozesses, umfassend:
- eine kryptographische Einrichtung (32) zum Bestimmen, Erzeugen oder Bearbeiten von einem oder mehreren zu versendenden Datenelementen;
- einen Prozessor (30) zum Umsetzen der zu versendenden Datenelemente in wenigstens einen Tastatur-Code;
- eine Schnittstelle (40) zum Versenden des wenigstens einen Tastatur-Codes.
